# EUROPÄISCHE PATENTSCHRIFT

(11) **EP 2 383 540 B1**
(45) Veröffentlichungstag und Bekanntmachung des Hinweises auf die Patenterteilung: **05.06.2013**
(21) Anmeldenummer: 10161537.5
(22) Anmeldetag: 29.04.2010
(51) Int. Cl.: G01B 21/04

(54) **Vorrichtung für Messungen an Folienblasen**
Device for measuring blister film
Dispositif pour mesures sur des soufflages de feuilles

(43) Veröffentlichungstag der Anmeldung: 02.11.2011
(73) Patentinhaber: Plast-Control GmbH, 42899 Remscheid (DE)
(72) Erfinder: Konermann, Stefan, 42899 Remscheid (DE); Stein, Markus, 58285 Gevelsberg (DE); Müller, Frank, 42279 Wuppertal (DE)
(74) Vertreter: Ter Meer Steinmeister & Partner

(56) Entgegenhaltungen:
- EP-A1- 1 116 931
- EP-A1- 1 674 821
- DE-A1- 4 126 337
- DE-A1- 19 632 385

## Beschreibung

Die Erfindung betrifft eine Vorrichtung für Messungen an Folienblasen, mit einer in Umfangsrichtung der Folienblase in gleichbleibendem Abstand zu dieser verlaufenden Führungsbahn, an der ein Wagen geführt ist, der einen auf die Umfangsfläche der Folienblase gerichteten Messkopf trägt, der durch ein Gelenk am freien Ende eines Auslegers gehalten ist, der an seinem anderen Ende schwenkbar mit dem Wagen verbunden ist, wobei dem Gelenk ein Kompensationsantrieb zur Korrektur der durch eine Schwenkbewegung des Auslegers bedingten Änderung der Orientierung des Messkopfes zugeordnet ist.

Bei der Herstellung von Blasfolien ist es wünschenswert, bei laufender Produktion Messungen an der Folienblase vorzunehmen. Insbesondere ist es erwünscht, die Dickenverteilung der Folie auf dem Umfang der Folienblase kontinuierlich zu überwachen, so dass durch Einwirkung auf die Kühl- und/oder Extrusionstemperatur ein konstantes Dickenprofil eingeregelt werden kann. Bei dem Messkopf handelt es sich in diesem Fall beispielsweise um einen kapazitiven Dickensensor, der sich auf einem Luftpolster schwebend über die äußere Umfangsfläche der Folienblase bewegt, wie in WO 2009/027037 beschrieben wird.

Aus DE 196 32 385 A1 ist eine Messvorrichtung der oben genannten Art bekannt, bei der der Ausleger in einer zur Ebene der Führungsbahn rechtwinkligen Ebene schwenkbar ist.

Aus EP 1 674 821 A1 ist eine Messvonichtung bekannt, bei der an der Führungsbahn zwei Wagen geführt sind, die durch eine Traverse miteinander verbunden sind. Der Messkopf ist in der Mitte der Traverse angeordnet. Die Traverse besteht aus zwei gelenkig oder teleskopartig miteinander verbundenen Teilen, so dass der Abstand zwischen den beiden Wagen auf der Führungsbahn variiert und damit die radiale Position des Messkopfes an den jeweiligen Durchmesser der Folienblase angepasst werden kann, wobei der Messkopf stets auf die Umfangsfläche der Folienblase gerichtet bleibt.

DE 41 26 337 A1 beschreibt eine Messvorrichtung, bei der der Wagen an einer geraden Führungsbahn geführt ist.

Aufgabe der Erfindung ist es, eine Messvorrichtung dieser Art baulich zu vereinfachen.

Diese Aufgabe wird erfindungsgemäß dadurch gelöst, dass der Ausleger in einer Ebene schwenkbar ist, die zu der Ebene der Führungsbahn parallel ist, und dass eine Steuereinheit dazu ausgebildet ist, anhand der Position des Wagens auf der Führungsbahn und anhand der Winkelstellung des Auslegers relativ zum Wagen den Azimut des Messkopfes in Bezug auf die Mittelachse der Folienblase zu bestimmen und die vom Messkopf gelieferten Messergebnisse dem jeweiligen Azimut zuzuordnen.

Erfindungsgemäß braucht je Messkopf nur ein einziger Wagen an oder auf der Führungsbahn angeordnet zu sein. Zur Anpassung der Position des Messkopfes an unterschiedliche Durchmesser der Folienblase wird der Ausleger relativ zum Wagen geschwenkt. Dabei ändert sich allerdings auch die Orientierung des Messkopfes relativ zur Umfangsfläche der Folienblase. Diese Änderung wird durch den Kompensationsantrieb rückgängig gemacht, so dass der Messkopf an der Stelle, an der er die Folie misst, stets parallel zur Umfangsfläche der Folienblase ausgerichtet ist.

Da der Ausleger in einer waagerechten Ebene, also parallel zur Ebene der Führungsbahn schwenkbar ist, ändert sich beim Verschwenken des Auslegers im allgemeinen auch der Azimut der Messposition, an der die Folie mit dem Messkopf vermessen wird. Damit man das Dickenprofil über den Umfang der Folienblase messen und aufzeichnen kann, muss zu jedem Messzeitpunkt der zugehörige Azimut der Messposition bekannt sein. Wenn der Ausleger geschwenkt wird, um die Vorrichtung an einen anderen Durchmesser der Folienblase anzupassen, so wird die dadurch bedingte Änderung des Azimuts rechnerisch korrigiert.

Vorteilhafte Ausgestaltungen der Erfindung sind in den abhängigen Ansprüchen angegeben.

Der Kompensationsantrieb kann ein aktiver Antrieb sein, beispielsweise in der Form eines geeignet angesteuerten Servomotors. Es ist jedoch auch ein passiver Antrieb möglich, der dadurch gebildet wird, dass die Schwenkbewegung des Messkopfes um das Gelenk mechanisch mit der Schwenkbewegung des Auslegers relativ zum Wagen gekoppelt wird. Die Kopplung kann beispielsweise durch ein gelenkiges Steuergestänge oder durch einen über Seil- und Kurvenscheiben laufenden Treibriemen erfolgen.

Im folgenden wird ein Ausführungsbeispiel anhand der Zeichnung näher erläutert.

Es zeigen:
- Fig. 1: einen schematischen Grundriss einer erfindungsgemäßen Messvorrichtung; und
- Fig. 2: eine vergrößerte Grundrissdarstellung wesentlicher Teile der Messvorrichtung in einem anderen Betriebszustand.

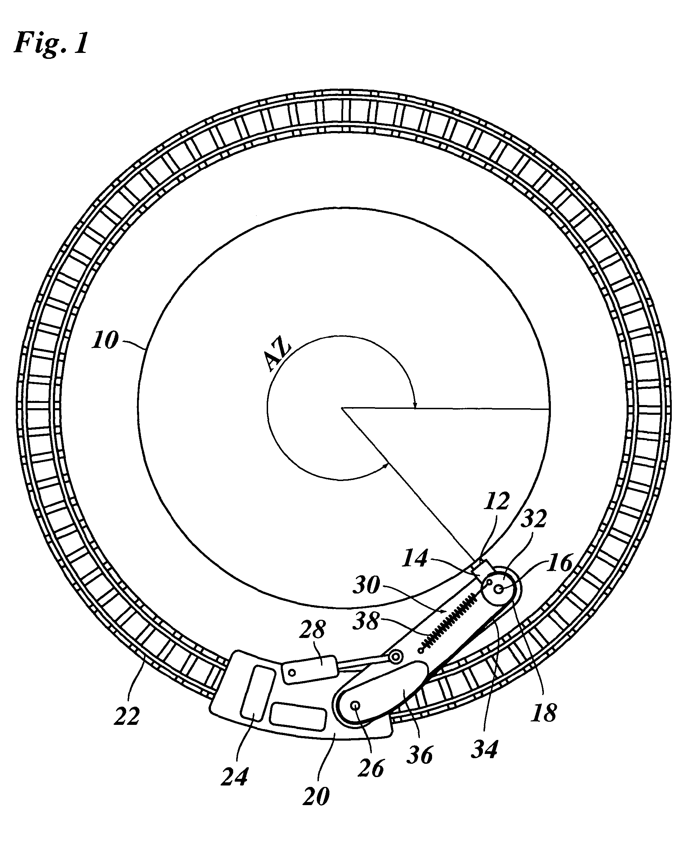

Die in Fig. 1 gezeigte Vorrichtung dient zur Ausführung von Messungen an einer schlauchförmigen Folienblase 10, die in Fig. 1 in einem horizontalen Schnitt gezeigt ist. Bei der Blasfolienherstellung wird bekanntlich ein Folienschlauch aus einer Ringdüse extrudiert und mit Innenluft zu der Folienblase 10 aufgeblasen, die dann nach oben abgezogen, flachgelegt und aufgewickelt wird. In der Zone, in der sich der Durchmesser der Folienblase durch das Einblasen von Innenluft vergrößert, wird die Folienblase zumeist auch mit Außenluft angeblasen und dadurch gekühlt, bis das Kunststoffmaterial an der sogenannten Frostgrenze seine Plastizität verliert und dann nicht weiter verstreckt werden kann. Umfangszonen der Folienblase 10, die weniger stark gekühlt werden, bleiben heißer und damit leichter streckbar, so dass die Folie hier stärker ausgedünnt wird, während sich in Umfangszonen, in denen stärker gekühlt wird, eine Dickstelle in der Folie ergibt. Ungleichmäßige Kühlungsbedingungen können daher zu einem ungleichmäßigen Dickenprofil der Folie führen. Die hier gezeigte Messvorrichtung dient vor allem dazu, das Dickenprofil der Folie oberhalb der Frostgrenze auf dem gesamten Umfang der Folienblase 10 kontinuierlich aufzunehmen, so dass die Kühlungsbedingungen in einem geschlossenen Regelkreis geregelt werden können.

Zu diesem Zweck liegt am Umfang der Folienblase 10 ein Messkopf 12 an, beispielsweise ein kapazitiver Messkopf, der auf einem Luftpolster über die Folienoberfläche gleitet. Der Messkopf 12 sitzt am Ende eines Messkopfhalters 14, der seinerseits durch ein Gelenk 16 schwenkbar am freien Ende eines Auslegers 18 gehalten ist.

Das andere Ende des Auslegers 18 ist an einem Wagen 20 befestigt, der auf einer Führungsbahn 22 geführt ist. Die Führungsbahn 22 verläuft im gezeigten Beispiel ringförmig um den gesamten Umfang der Folienblase 10. Mit Hilfe eines Fahrantriebs 24 ist der Wagen 20 längs der Führungsbahn 22 verfahrbar, so dass der Messkopf 12 um den Umfang der Folienblase 10 umläuft.

Damit die Position des Messkopfes 12 an wechselnde Durchmesser der Folienblase 10 angepasst werden kann, ist der Ausleger 18 relativ zu dem Wagen 20 um eine vertikale (also parallel zur Achse der Folienblase 10 verlaufende) Achse 26 schwenkbar. Dazu ist im gezeigten Beispiel als Schwenkantrieb 28 Spindeltrieb oder wahlweise auch eine hydraulische oder pneumatische Kolben/Zylinder-Einheit vorgesehen.

Wenn jedoch, um den Messkopf 12 auf einen anderen Durchmesser der Folienblase einzustellen, der Ausleger 18 um einen bestimmten Winkel um die Achse 26 gedreht wird, so ändert sich entsprechend auch die Orientierung des Messkopfes 12. Ohne weitere Gegenmaßnahmen wäre deshalb die der Folienoberfläche zugewandte Messfläche des Messkopfes 12 nicht mehr parallel zur Folienoberfläche ausgerichtet, und es könnte keine korrekte Messung vorgenommen werden. Aus diesem Grund ist dem Gelenk 16 ein Kompensationsantrieb 30 zugeordnet, der die Orientierung des Messkopfes 12 selbsttätig korrigiert.

Wenn, wie in dem in Fig. 1 gezeigten Zustand, der Ausleger 18 nicht genau tangential zur Führungsbahn 22 verläuft und der Ausleger dann um die Achse 26 geschwenkt wird, so weist die Bewegung des Gelenks 16 am freien Ende des Auslegers auch eine Bewegungskomponente in Umfangsrichtung der Führungsbahn 22 auf, mit der Folge, dass sich bei unveränderter Position des Wagens 20 der Azimut AZ der Messposition ändert. Diese Änderung muss bei der Aufzeichnung der vom Messkopf 12 gelieferten Messergebnisse berücksichtigt werden, damit die gemessene Foliendicke korrekt dem jeweiligen Umfangssegment der Folienblase zugeordnet werden kann.

Darüber hinaus führt diese Änderung des Azimuts AZ auch dazu, dass die Umfangsfläche der Folienblase 10 an der Stelle des Messkopfes 12 eine andere Orientierung hat als zuvor. Der Kompensationsantrieb 30 muss deshalb im allgemeinen nicht nur den Messkopfhalter 14 um den Winkel zurückdrehen, um den der Ausleger 18 relativ zum Wagen 20 geschwenkt wurde, sondern muss auch die durch die Änderung des Azimuts verursachte Änderung der Orientierung der Oberfläche der Blasfolie ausgleichen.

Im gezeigten Ausführungsbeispiel ist der Kompensationsantrieb 30 ein passiver Antrieb, der nicht über einen eigenen Motor verfügt, sondern die Schwenkbewegung des Auslegers 18 relativ zum Wagen 20 mechanisch mit einer Drehung des Messkopfträgers 14 um das Gelenk 16 koppelt. Zu diesem Zweck ist an dem Messkopfträger 14 eine Riemenscheibe 32 befestigt, über deren Umfang ein Treibriemen 34 läuft. Ein Ende des Treibriemens 34 ist an der Riemenscheibe 32 befestigt. Das andere Ende ist an einer Kurvenscheibe 36 befestigt und läuft über eine durch diese Kurvenscheibe 36 gebildete Steuerkontur. Die Kurvenscheibe 36 ist drehfest mit dem Wagen 20 verbunden.

An der Riemenscheibe 32 greift exzentrisch eine Zugfeder 38 an, die den Treibriemen 34 gespannt hält. Wenn nun der Ausleger 18 relativ zum Wagen 20 und damit auch relativ zu der Kurvenscheibe 36 um die Achse 26 geschwenkt wird, so wälzt der Treibriemen 34 an der Steuerkontur der Kurvenscheibe 36 ab, wodurch er sich entweder verkürzt oder verlängert, so dass die Riemenscheibe 32 und damit auch der Messkopfhalter 14 und der Messkopf 12 entsprechend um das Gelenk 16 gedreht werden. Die Kontur der Kurvenscheibe 36 ist so berechnet, dass diese Drehung nicht nur die Drehung des Auslegers um die Achse 26, sondern auch die Änderung des Azimuts ausgleicht, so dass die Messfläche des Messkopfes 12 wieder exakt parallel zur Umfangsfläche der Folienblase 10 ausgerichtet ist.

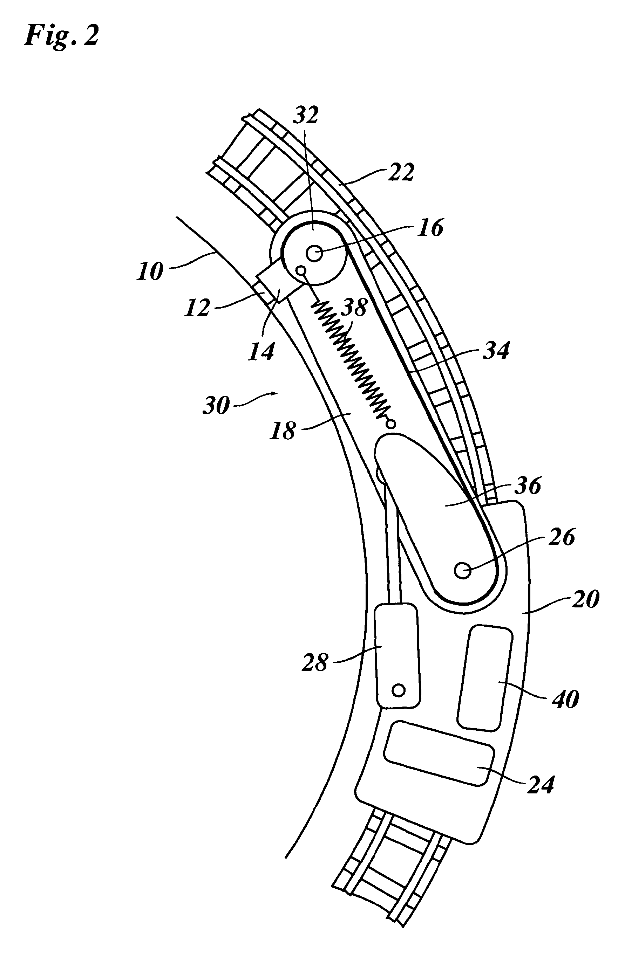

Fig. 2 illustriert einen Zustand, in dem die Folienblase 10 einen größeren Durchmesser hat und somit in geringerem Abstand zu der Führungsbahn 22 verläuft. Der Ausleger 18 ist dementsprechend weiter nach außen verschwenkt. Dadurch wurde der Treibriemen 34 weiter von der Steuerkontur der Kurvenscheibe 36 abgehoben, und die effektive Länge des Treibriemens 34 hat sich vergrößert. Die Längenzunahme hat zu einer Kontraktion der Zugfeder 38 geführt, so dass sich die Riemenscheibe 32 um einen durch die Geometrie der Kurvenscheibe 36 bestimmten Winkel gedreht hat. Dieser Winkel ist so groß, dass der Messkopf 12 in der neuen Position wieder exakt parallel an der Oberfläche der Folienblase 10 anliegt.

Auf dem Wagen 20 ist eine elektronische Steuereinheit 40 angeordnet, die den Fahrantrieb 24, den Schwenkantrieb 28 für den Ausleger 18 sowie auch den Betrieb des Messkopfes 12 steuert und dessen Messergebnisse aufnimmt und aufzeichnet. Die Steuereinheit 40 wertet auch ein vom Fahrantrieb 24 geliefertes Wegsignal aus, das die Position des Wagens 20 auf der Führungsbahn 22 angibt, sowie ein Drehwegsignal, das von einem nicht gezeigten Drehweggeber am Ausleger 18 geliefert wird und die Winkelstellung des Auslegers 18 relativ zum Wagen 20 angibt. In einer bevorzugten Ausführungsform ist in den Schwenkantrieb 28 (Spindeltrieb) ein Weggeber integriert, der den (linearen) Verstellweg des Spindeltriebs misst und dessen Signal dann in das Drehwegsignal umgerechnet wird. Aus diesen Daten berechnet die Steuereinheit 40 die azimutale Position des Messkopfes 12, so dass die Ergebnisse der Dickenmessung korrekt dem zugehörigen Umfangsbereich der Folienblase 10 zugeordnet werden können.

Wenn die Messvorrichtung umgerüstet und an einen anderen Folienblasendurchmesser angepasst wird, so kann wahlweise der Ausleger 18 auch von Hand verschwenkt werden. Der Schwenkantrieb 28 ist daher nicht zwingend erforderlich.

Wenn andererseits ein steuerbarer Schwenkantrieb 28 vorhanden ist, kann die Steuereinheit 40 die Schwenkbewegung des Auslegers 18 in Abhängigkeit von der aktuellen Form und Größe der Folienblase 10 steuern. Zu diesem Zweck kann in den Messkopf 12 ein Kraftsensor integriert sein, der die Kraft misst, mit der die Folienblase gegen den Messkopf andrückt. Ein Beispiel wird in EP 1 191 305 B1 beschrieben. Wenn die Steuereinheit 40 diese Kraft auf einen vorgegebenen Sollwert regelt, passt sich der Messkopf automatisch der aktuellen Lage der Folienblase an. Alternativ kann die Lage des Messkopfes relativ zur Folienblase auch mittels eines Abstandssensors, z. B. eines Ultraschall-Abstandssensors gemessen und geregelt werden.

## Patentansprüche

1. Vorrichtung für Messungen an Folienblasen (10), mit einer in Umfangsrichtung der Folienblase in gleichbleibendem Abstand zu dieser verlaufenden Führungsbahn (22), an der ein Wagen (20) geführt ist, der einen auf die Umfangsfläche der Folienblase (10) gerichteten Messkopf (12) trägt, der durch ein Gelenk (16) am freien Ende eines Auslegers (18) gehalten ist, der an seinem anderen Ende schwenkbar mit dem Wagen (20) verbunden ist, wobei dem Gelenk (16) ein Kompensationsantrieb (30) zur Korrektur der durch eine Schwenkbewegung des Auslegers (18) bedingten Änderung der Orientierung des Messkopfes (12) zugeordnet ist, **dadurch gekennzeichnet, dass** der Ausleger (18) in einer Ebene schwenkbar ist, die zu der Ebene der Führungsbahn (22) parallel ist, und dass eine Steuereinheit (40) dazu ausgebildet ist, anhand der Position des Wagens (20) auf der Führungsbahn (22) und anhand der Winkelstellung des Auslegers (18) relativ zum Wagen (20) den Azimut (AZ) des Messkopfes (12) in Bezug auf die Mittelachse der Folienblase (10) zu bestimmen und die vom Messkopf (12) gelieferten Messergebnisse dem jeweiligen Azimut zuzuordnen.

2. Vorrichtung nach Anspruch 1, bei der der Kompensationsantrieb (30) in einer mechanischen Kopplung zwischen der Schwenkbewegung des Auslegers (18) relativ zum Wagen (20) und einer Drehung des Messkopfes (12) um das Gelenk (16) besteht.

3. Vorrichtung nach Anspruch 2, bei der der Kompensationsantrieb (30) eine Riemenscheibe (32) und einen über diese Riemenscheibe laufenden Treibriemen (34) aufweist.

4. Vorrichtung nach Anspruch 3, bei der der Kompensationsantrieb (30) eine Kurvenscheibe (36) aufweist, die eine Steuerkontur bildet, an welcher der Treibriemen (34) abwälzt.

5. Vorrichtung nach Anspruch 4, bei der die Kurvenscheibe (36) feststehend am Wagen (20) gehalten ist.

6. Vorrichtung nach einem der Ansprüche 3 bis 5, bei der die Riemenscheibe (32) elastisch in einer Drehrichtung vorgespannt ist, in der der Treibriemen (34) unter Zugspannung gehalten wird.

## Claims

1. An apparatus for measuring film bubbles (10), comprising a guide track (22) that extends in circumferential direction of the film bubble with a constant spacing relative to the latter, said guide track guiding a carriage (20) which carries a measuring head (12) facing the peripheral surface of the film bubble (10) and being connected to a free end of a cantilever (18) via an articulated joint (16), said cantilever having another end pivotally connected to the carriage (20), wherein a compensating drive mechanism (30) for correcting a change in the orientation of the measuring head (12) resulting from a pivotal movement of the cantilever (18) is associated with said articulated joint (16), **characterized in that** the cantilever (18) is pivotable in a plane that extends in parallel with the plane of the guide track (22), and a control unit (40) is adapted to determine an azimuthal position (AZ) of the measuring head (12) relative to a central axis of the film bubble (10) on the basis of the position of the carriage (20) on the guide track (22) and the angular position of the cantilever (18) relative to the carriage (10), said control unit being further adapted to assign the measurement results provided by said measuring head (12) to said azimuthal positions.

2. The apparatus according to claim 1, wherein the compensating drive mechanism (30) is a coupling mechanism for mechanically coupling the pivotal movement of the cantilever (18) relative to the carriage (20) to a rotation of the measuring head (10) about said articulated joint (16).

3. The apparatus according to claim 2, wherein said compensating drive mechanism (30) comprises a pulley (32) and a belt (34) guided over said pulley.

4. The apparatus according to claim 3, wherein said compensating drive mechanism (30) comprises a cam disk (36) forming a control contour from which said belt (34) rolls off.

5. The apparatus according to claim 4, wherein the cam disk (36) is fixedly mounted on the carriage (20).

6. The apparatus according to any of the claims 3 to 5, wherein the pulley (32) is elastically biased in an angular direction for holding the belt (34) under tension.

## Revendications

1. Dispositif pour réaliser des mesures sur des bulles de film (10), comportant une piste de guidage (22) s'étendant dans une direction circonférentielle de la bulle de film avec un espacement constant par rapport à celle-ci, piste de guidage sur laquelle est guidé un chariot (20) qui supporte une tête de mesure (12) dirigée vers la surface périphérique de la bulle de film (10), laquelle tête de mesure est maintenue par un joint articulé (16) sur l'extrémité libre d'un bras (18) relié à son autre extrémité au chariot (20) de manière pivotante, dans lequel le joint articulé (16) est associé à un mécanisme d'entraînement et de compensation (30) pour corriger la variation de l'orientation de la tête de mesure (12) résultant d'un mouvement de pivotement du bras (18), **caractérisé en ce que** le bras (18) peut pivoter dans un plan qui est parallèle au plan de la piste de guidage (22), et **en ce qu'**une unité de commande (40) est configurée pour déterminer l'azimut (AZ) de la tête de mesure (12) par rapport à l'axe médian de la bulle de film (10) au moyen de la position du chariot (20) sur la piste de guidage (22) et au moyen de la position angulaire du bras (18) par rapport au chariot (20), et pour associer les résultats de mesure fournis par la tête de mesure (12) à l'azimut respectif.

2. Dispositif selon la revendication 1, dans lequel le mécanisme d'entraînement et de compensation (30) est constitué d'un couplage mécanique entre le mouvement de pivotement du bras (18) par rapport au chariot (20) et une rotation de la tête de mesure (12) autour du joint articulé (16).

3. Dispositif selon la revendication 2, dans lequel le mécanisme d'entraînement et de compensation (30) comporte une poulie (32) et une courroie d'entraînement (34) tournant sur cette poulie.

4. Dispositif selon la revendication 3, dans lequel le mécanisme d'entraînement et de compensation (30) comporte un disque à came (36) qui forme un contour de commande sur lequel la courroie d'entraînement (34) roule.

5. Dispositif selon la revendication 4, dans lequel le disque à came (36) est fixement maintenu sur le chariot (20).

6. Dispositif selon l'une quelconque des revendications 3 à 5, dans lequel la poulie (32) est préchargée élastiquement dans un sens de rotation dans lequel la courroie d'entraînement (34) est maintenue sous tension.
